Europäisches Patentamt

European Patent Office

Office européen des brevets

(11) Numéro de publication: **0 445 481 A1**

# (12) DEMANDE DE BREVET EUROPEEN

(21) Numéro de dépôt: 90420145.6

(22) Date de dépôt: 22.03.90

(51) Int. Cl.⁵: **B60B 33/00**, B60B 35/00, F16C 33/10

(30) Priorité: 06.03.90 FR 9003207

(43) Date de publication de la demande:
11.09.91 Bulletin 91/37

(84) Etats contractants désignés:
AT BE CH DE DK ES GB GR IT LI LU NL SE

(71) Demandeur: Villemin, Michel
283 Avenue Victor Hugo
F-26000 Valence(FR)

(72) Inventeur: Villemin, Michel
283 Avenue Victor Hugo
F-26000 Valence(FR)

(74) Mandataire: Dupuis, François
Cabinet Laurent et Charras, 3 Place de
l'Hôtel-de-Ville, BP 203
F-42005 St. Etienne Cédex 1(FR)

(54) Dispositif de graissage pour roulettes.

(57) Le dispositif de graissage notamment pour roulettes du type de celles comprenant un organe tournant (1) monté sur un axe de rotation (2) solidaire d'un boîtier support, l'organe tournant présentant un fourreau axial (1a) apte à être engagé à libre rotation sur l'axe (2), est remarquable en ce que l'alésage dudit fourreau (1a) présente, selon la même orientation que ses génératrices, des rainures (1c) aptes à recevoir une matière de graissage (G), lesdites rainures (1c) étant profilées pour former une réserve de ladite matière qui ne peut être évacuée que très lentement de manière a constituer dans le temps un graissage permanent ou quasi permanent.

FIG.3

Plus particulièrement, l'invention s'applique pour le roulettes du type de celles décrites dans la Demande de Brevet FR 88.13060 dont le demandeur de la présente est également titulaire. Ces roulettes comprennent pour l'essentiel un organe tournant monté sur un axe de rotation solidaire d'un boîtier-support. L'organe tournant présente un fourreau axial apte à être engagé sur l'axe de rotation.

Selon une caractéristique à la base de cette Demande de Brevet FR 88.13060, chaque roulette est équipée d'un dispositif d'étanchéité conformé pour éviter toute infiltration de poussière et autre a l'intérieur du boîtier au niveau de l'aie de rotation.

Le problème que se propose de résoudre l'invention est d'intégrer à ce type de roulette, un dispositif de graissage objet de la présente invention. Notamment, le problème que se propose de résoudre l'invention est d'assurer une lubrification permanente des parties en rotation de la roulette en supprimant tout entretien.

Un tel problème est résolu en ce que l'alésage dudit fourreau présente, selon la même orientation que ses génératrices, des rainures aptes à recevoir une matière de graissage, lesdites rainures étant profilées pour former une réserve de ladite matière qui ne peut être évacuée que très lentement de manière à constituer dans le temps un graissage permanent ou quasi permanent.

Cette solution apte à résoudre le problème posé de la lubrification, s'applique aussi au montage tournant du boîtier support de la roulette à l'élément devant la recevoir.

Dans ce but, le boîtier présente en débordement, un fourreau dont l'alésage est apte a être engagé à libre rotation sur un aie solidaire de l'élément devant recevoir la ou les roulettes, ledit alésage présentant, selon la même orientation que ses génératrices, des rainures aptes à recevoir une matière de graissage, lesdites rainures étant profilées pour former une réserve de ladite matière qui ne peut être évacuée que très lentement de manière à constituer dans le temps un graissage permanent ou quasi permanent.

Le problème posé d'assurer une lubrification permanente avec une évacuation très lente de la matière de graissage, est résolu en ce que les rainures sont de section trapézoïdale et de section dégressive à partir de l'extrémité libre de l'alésage du fourreau. De même, les rainures sont raccordées avec l'alésage du fourreau par des chanfreins

Avantageusement, les rainures sont décalées angulairement de 120°.

Bien évidemment, le dispositif de graissage selon l'invention se combine avantageusement avec le dispositif d'étanchéité tel qu'enseigné par la Demande de Brevet FR 88.13060. On résoud ainsi à la fois le problème de l'étanchéité aux fibres, poussières et autres, et le problème de la lubrification permanente dans le temps en supprimant tout entretien.

Ce double problème est résolu en ce que au moins une rondelle profilée d'étanchéité est montée entre l'organe tournant et le boîtier support, de manière à éviter toute infiltration de poussière et autre à l'intérieur dudit boîtier au niveau de l'axe de rotation notamment, la ou lesdites rondelles étant réalisées dans une matière synthétique, hydrophobe, élastique à la compression, résistante à l'abrasion en possédant un excellent pouvoir de filtration et en étant stable aux élévations de température.

Plus particulièrement, la ou les rondelles coopèrent avec un logement circulaire profilé (formé sur la face interne de l'organe tournant , la ou lesdites rondelles, après mise en place entre le corps et l'organe tournant, formant une lèvre d'étanchéité.

L'invention est exposée ci-après plus en détail à l'aide des dessins annexés dans lesquels :

La figure 1 est une vue en coupe longitudinale de l'organe tournant.

La figure 2 est une vue en coupe transversale considérée selon la ligne 2-2 de la figure 1.

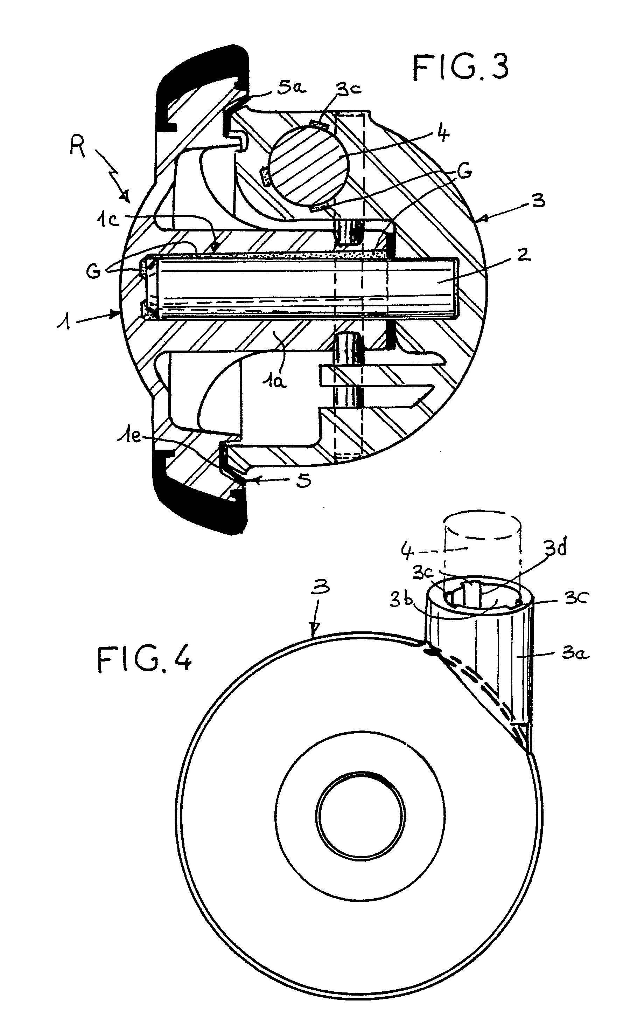

La figure 3 est une vue en coupe longitudinale de l'organe tournant après montage sur l'axe de rotation solidaire du boîtier support.

La figure 4 est une vue extérieure de face de la roulette.

On rappelle, pour une meilleure compréhension de la suite de la description, que la roulette désignée dans son ensemble par (R) comprend, d'une manière connue, un organe (1) monté à libre rotation sur un axe (2) solidaire d'un boîtier-support (3). Plus particulièrement, l'organe tournant (1) présente axialement un fourreau (1a) apte à être engagé sur l'axe (2). Le boîtier (3) présente, en débordement d'une partie de sa périphérie, un fourreau (3a) apte à être monté à libre rotation sur un axe (4) solidaire de l'élément (non représenté) devant recevoir la ou les roulettes.

Suivant une caractéristique à la base de l'invention, l'alésage (1b) du fourreau (1a) présente des rainures (1c) aptes à recevoir une matière de graissage (G). Ces rainures (1c) sont disposées selon la même orientation que les génératrices de l'alésage (1b), et sont profilées en section pour former une réserve de la matière de graissage (G). En outre, le profil de ces rainures est déterminé pour que l'évacuation de la matière de graissage ne puisse s'effectuer que très lentement, de manière à constituer un graissage permanent ou quasi-permanent.

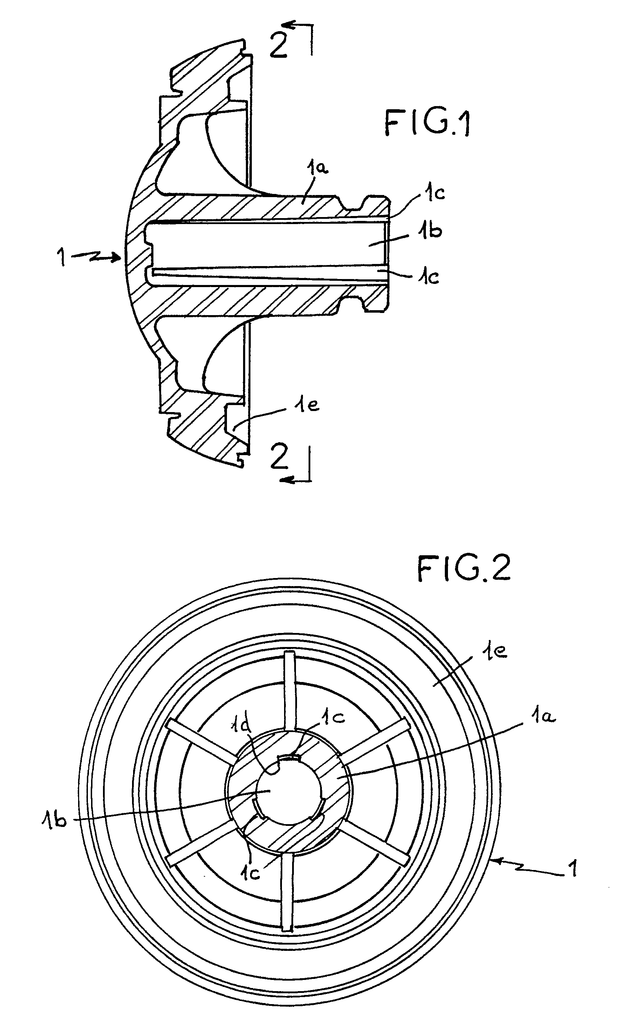

Dans ce but, comme le montrent notamment les figures 1 et 2, les rainures (1c) sont de section trapézoïdale et de section dégressive à partir de l'extrémité libre de l'alésage (1b) du fourreau (1a). En outre, le raccordement des rainures graissées avec la périphérie de l'alésage (1b) s'effectue par une partie chanfreinée (1d) pour assurer la lubrification périphérique de l'axe (2)

Avantageusement, les rainures (1c) sont décalées angulairement de 120°.

Ces dispositions telles décrites et aptes à assurer un dispositif de graissage au niveau de l'axe de rotation (2) et de l'organe tournant de la roulette, s'appliquent et se retrouvent à l'identique au niveau du boîtier-support et de son montage tournant eu égard à l'axe (4). A cet effet, l'alésage (3b) du fourreau (3a) présente des rainures (3c) de Même profil que les rainures (1c) du fourreau (1a). Comme précédemment, ces rainures (3c) décalées de 120°, font office de réserve pour la matière de graissage (G). De même, ces rainures (3c) sont raccordées avec l'alésage (3b) par des chanfreins (3d). Ces dispositions permettent d'assurer la lubrification périphérique de l'axe (4).

D'une manière préférée, la matière de graissage utilisée est une graisse synthétique qui ne s'oxyde pas et ne durcit pas dans le temps et par conséquent ne sèche pas.

Compte tenu de ces dispositions, il suffit donc de garnir l'alésage des fourreaux (1a et 3a) d'une certaine quantité de graisse (G) qui sera automatiquement repoussée dans les rainures correspondantes (1c et 3c) lors du montage desdits fourreaux sur les axes correspondants (2 et 4).

Il apparaît donc que la graisse (G) n'est libérée sur les ares (2 et 4) que très lentement dans le temps en direction notamment du volume interne du boîtier-support.

Comme indiqué, ce dispositif de graissage s'applique avantageusement, en combinaison avec les caractéristiques définies dans la Demande de Brevet 88.13060 et concernant un dispositif d'étanchéité pour les roulettes. A cet égard, au moins une rondelle profilée d'étanchéité (5) est montée entre l'organe tournant (1) boîtier_support (3), de manière à éviter toute infiltration de poussière à l'intérieur dudit boîtier au niveau de l'axe (2). La rondelle (5) coopère avec un logement circulaire profilé (1e) formé sur la face interne de l'organe tournant (1). Après mise en place de la ou des rondelles (5) entre le corps (3) et l'organe tournant (1), ces dernières forment une lèvre d'étanchéité (5a).

La ou les rondelles (5) sont réalisées dans une matière synthétique, hydrophobe, élastique à la compression, résistante à l'abrasion et possédant un excellent pouvoir de filtration tout en étant stable aux élévations de température. Par exemple, la ou les rondelles (5) sont réalisées en feutre.

Les avantages ressortent bien de la description. En particulier on souligne et on rappelle :

- L'étanchéité aux fibres et aux poussières assurée par la ou les rondelles en feutre.
- Lubrification à vie compte tenu d'une graisse spéciale, stable dans le temps et contenue dans des rainures spéciales faisant office de réserves.
- La suppression de tout entretien.

## Revendications

1. Dispositif de graissage notamment pour roulettes du type de celles comprenant un organe tournant (1) monté sur un axe de rotation (2) solidaire d'un boîtier support, l'organe tournant présentant un fourreau axial (1a) apte à être engagé à libre rotation sur l'axe (2), caractérisé en ce que l'alésage (1b) dudit fourreau (1a) présente, selon la même orientation que ses génératrices, des rainures (1c) aptes à recevoir une matière de graissage (G), lesdites rainures (1c) étant profilées pour former une réserve de ladite matière qui ne peut être évacuée que très lentement de manière à constituer dans le temps un graissage permanent ou quasi permanent.

2. Dispositif selon la revendication 1, caractérisé en ce que le boîtier (3) présente en débordement, un fourreau (3a) dont l'alésage (3b) est apte à être engagé à libre rotation sur un axe (4) solidaire de l'élément devant recevoir la ou les roulettes, ledit alésage présentant, selon la même orientation que ses génératrices, des rainures (3c) aptes à recevoir une matière de graissage (G), lesdites rainures étant profilées pour former une réserve de ladite matière qui ne peut être évacuée que très lentement de manière à constituer dans le temps un graissage permanent ou quasi permanent.

3. Dispositif selon l'une quelconque des revendications 1 et 2, caractérisé en ce que les rainures (1c - 3c) sont de section trapézoïdale et de section dégressive à partir de l'extrémité libre de l'alésage du fourreau (1a - 3a).

4. Dispositif selon la revendication 3, caractérisé en ce que les rainures (1c - 3c) sont raccordées avec l'alésage du fourreau correspondant par des chanfreins (1d - 3d).

5. Dispositif selon l'une quelconque des revendications 1, 2 3 et 4, caractérisé en ce que les rainures sont décalées angulairement de 120°.

6. Dispositif selon la revendication 1, caractérisé en ce que au moins une rondelle profilée d'étanchéité (5) est montée entre l'organe tournant (1) et le boîtier support (3), de manière à éviter toute infiltration de poussière et autre à l'intérieur dudit boîtier au niveau de l'axe de rotation (2) notamment, la ou lesdites rondelles (5) étant réalisées dans une matière synthétique, hydrophobe, élastique à la compression, résistante à l'abrasion en possédant un excellent pouvoir de filtration et en étant stable aux élévations de température.

7. Dispositif selon la revendication 6, caractérisé en ce que la ou les rondelles (5) coopèrent avec un logement circulaire profilé (1e) formé sur la face interne de l'organe tournant (1).

8. Dispositif selon les revendications 6 et 7 ensemble, caractérisé en ce que la ou les rondelles (5), après mise en place entre le corps (3) et l'organe tournant (1), forment une lèvre d'étanchéité (5a).

9. Dispositif selon la revendication 6, caractérisé en ce que la ou les rondelles (5) sont réalisées en feutre.

FIG.1

FIG.2

FIG.3

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 192 387  (GUY-RAYMOND)<br>* page 1, lignes 1 - 9;  page 6, ligne 2 - page 7, ligne 19; figures 1-4 * | 1 | B 60 B  33/00<br>B 60 B  35/00<br>F 16 C  33/10 |
| Y | | 3-8 | |
| | --- | | |
| Y | DE-C-  171 516  (MORCZINEK)<br>* page 1, lignes 17 - 32; figures 1-5 * | 3,4,5 | |
| | --- | | |
| Y | GB-A-1 403 190  (ARCHIBALD KENRICK)<br>* page 2, lignes 23 - 45; figures 1, 2 * | 1,6,7,8 | |
| | --- | | |
| A | DE-C-  225 881  (KNAPPE)<br>* page 1, ligne 59 - page 2, ligne 7; figures 1-3 * | 1,4 | |
| | --- | | |
| A | US-A-3 060 488  (SKUPAS)<br>* colonne 2, lignes 15 - 29; figure 2 * | 1,6,7 | |
| | ----- | | |

|  |  |
|---|---|
|  | **DOMAINES TECHNIQUES RECHERCHES (Int. Cl.5)**<br><br>B 60 B<br>F 16 C |

Le présent rapport a été établi pour toutes les revendications

| Lieu de la recherche | Date d'achèvement de la recherche | Examinateur |
|---|---|---|
| LA HAYE | 24-07-1990 | AYITER I. |